# EUROPÄISCHE PATENTSCHRIFT

(11) **EP 3 999 398 B1**
(45) Veröffentlichungstag und Bekanntmachung des Hinweises auf die Patenterteilung: **17.06.2026**
(21) Anmeldenummer: 20743989.4
(22) Anmeldetag: 15.07.2020
(51) Int. Cl.: B62B 9/00

(54) **KINDERWAGEN**
PRAM
LANDAU

(30) Priorität: 16.07.2019 DE 202019002989 U
(43) Veröffentlichungstag der Anmeldung: 25.05.2022
(73) Patentinhaber: CYBEX GmbH, 95448 Bayreuth (DE)
(72) Erfinder: SPOUR, Jiri, 25241 Zlatniky-Hodkovice (CZ)
(74) Vertreter: Meissner Bolte Partnerschaft mbB
(86) Internationale Anmeldenummer: PCT/EP2020/070056
(87) Internationale Veröffentlichungsnummer: WO 2021/009262

(56) Entgegenhaltungen:
- EP-A1- 2 848 239
- EP-A1- 3 444 141
- EP-A2- 2 332 806
- WO-A1-2017/176202
- DE-A1- 102011 114 337
- DE-A1- 102013 224 885
- DE-U1- 202017 104 166
- US-A1- 2015 066 277
- US-B2- 9 849 901

## Beschreibung

Die Erfindung betrifft ein Kinderwagengestell sowie einen entsprechenden Kinderwagen, insbesondere mit Motorunterstützung.

Motorisierte Kinderwägen sind grundsätzlich bekannt. Diese können so konfiguriert sein, dass sie ausschließlich durch Motorkraft bewegt werden können. Weiterhin ist es grundsätzlich bekannt, Kinderwägen mit Motorunterstützung auszustatten, die die Antriebskraft einer den Kinderwagen bedienenden Person unterstützt, jedoch keine Unterstützung leistet, wenn durch den Bedienenden keine Kraft ausgeübt wird.

Beispielsweise zeigt die US 9 849 901 B2 einen Container mit Servorädern mit intelligenter Drehmomentsteuerung für den Transport von Gütern.

Die DE 20 2017 104166 U1 zeigt darüber hinaus ein Kinderwagengestell, umfassend einen Elektromotor, zum unterstützenden Antreiben des Kinderwagengestells und eine Kraft-Sensoreinrichtung zum Erfassen einer Richtung und/oder eines Betrages einer Kraft und/oder einer Kraftkomponente, die auf den Schieber des Kinderwagens einwirkt, und/oder zum Erfassen einer aus dieser Kraft bzw. Kraftkomponente abgeleiteten Größe, insbesondere einer zeitlichen Änderung der Kraft bzw. Kraftkomponente.

Es ist Aufgabe der Erfindung, ein in der Bedienung einfaches, wenig aufwändiges und robustes, insbesondere motorisiertes Kinderwagengestell sowie einen entsprechenden Kinderwagen vorzuschlagen, der es der den Kinderwagen bedienenden Person insbesondere erlaubt, den Kinderwagen auf einfache, komfortable und präzise Art und Weise zu steuern.

Diese Aufgabe wird insbesondere durch einen Kinderwagen bzw. ein Kinderwagengestell bzw. ein entsprechendes Verfahren nach einem der beiliegenden Ansprüche (jeweils für sich oder in Kombination) gelöst.

Insbesondere wird die Aufgabe gelöst durch einen Kinderwagen oder Kinderwagengestell, umfassend mindestens einen Motor, insbesondere Elektromotor, zum unterstützenden Antreiben des Kinderwagen oder Kinderwagengestells, einen Schieber zum Schieben des Kinderwagen oder Kinderwagengestells, und mindestens eine Kraft-Sensoreinrichtung zum Erfassen einer Richtung und/oder eines Betrages einer Kraft und/oder einer Kraftkomponente, die auf den Schieber einwirkt, und/oder zum Erfassen einer aus dieser Kraft bzw. Kraftkomponente abgeleiteten Größe, insbesondere eines Drehmomentes und/oder einer zeitlichen Änderung der Kraft bzw. Kraftkomponente.

Die Kraft-Sensoreinrichtung kann mindestens einen Drehmomentsensor und/oder mindestens zwei (Kraft-)Sensoren umfassen.

Die Erfindung betrifft im Allgemeinen einen Kinderwagen bzw. ein Kinderwagengestell, der zumindest einen Schieber, mehrere Räder (bevorzugt drei oder vier Räder), mindestens einen Sensor sowie einen Antrieb aufweisen kann. Der Antrieb kann seinerseits jeweils zumindest einen Elektromotor, eine Steuerung sowie eine (vorzugsweise sekundäre) Batterie umfassen.

Das Kinderwagengestell bzw. der Kinderwagen kann weitere Elemente wie z.B. Vorderradstreben und/oder Hinterradstreben sowie ggf. eine Kinderaufnahmeeinrichtung (z.B. Sitzeinheit oder Liegewanne) oder Adapter zum Anbringen einer solchen umfassen.

Der mindestens eine Sensor ist dazu ausgebildet**,** eine durch einen Benutzer (also einer Person, die das Kindewagengestell schiebt) zum Zweck des Schiebens aufgebrachte Kraft oder Komponenten dieser Kraft und/oder aus der Kraft oder deren Komponenten abgeleitete Größen (z.B. ein Drehmoment, eine zeitliche Änderung etc.) zu detektieren.

Der mindestens eine Sensor bzw. ein weiterer Sensor ist dazu ausgebildet, eine aktuelle Geschwindigkeit des Kinderwagengestells (insbesondere in Bezug auf einen Untergrund, den die Räder während einer Benutzung des Kinderwagengestells kontaktieren) zu detektieren.

Der mindestens eine Sensor kann dabei (insbesondere wenn er zur Detektion einer Kraft ausgebildet ist) im oder am Schieber, insbesondere in oder an einem Transversalabschnitt bzw. Horizontalabschnitt des Schiebers angeordnet sein. Insbesondere können auch mehrere solcher Sensoren, z.B. zwei solcher Sensoren, jeweils in oder an relativ weit außen, also nahe den lateralen Seiten des Kinderwagengestells liegenden Bereichen des Schiebers (bzw. des Transversalabschnitts bzw. Horizontalabschnitts) angeordnet sein.

Der mindestens eine Sensor kann (insbesondere wenn er zur Detektion einer Kraft ausgebildet ist) so angeordnet sein, dass seine Detektionsrichtung zumindest im Wesentlichen vom Schieber aus vom Benutzer weg zeigt, also ggf. in Richtung einer Kinderaufnahmeeinrichtung oder in Richtung der Adapter zur Aufnahme einer solchen. Der Sensor kann vorzugsweise ausgehend von der vorgenannten Richtung leicht nach unten geneigt sein, z.B. um 5° bis 15°, insbesondere um 7° bis 10°.

Der mindestens eine Sensor kann (insbesondere wenn er zur Detektion eines Drehmoments ausgebildet ist) an oder in einem Anlenkungspunkt, ggf. an oder in den Anlenkungspunkten des Schiebers an den anderen Gestellkomponenten angeordnet sein.

Der mindestens eine Sensor kann (insbesondere wenn er zur Detektion einer Geschwindigkeit ausgebildet ist) an oder in den Rädern oder in deren unmittelbarer Umgebung angeordnet sein. Insbesondere kann ein solcher Sensor so angeordnet sein, dass er die Rotationsgeschwindigkeit der Räder in Bezug auf die weiteren Gestellkomponenten erfassen kann. Ausführungsgemäß kann ein solcher Sensor die Anzahl der vollständigen Umdrehungen mindestens eines Rads erfassen, etwa indem durch die Rotation des mindestens einen Rads ein Magnet durch eine Leiterschleife geführt wird.

Der mindestens eine Sensor kann (insbesondere wenn er zur Detektion einer Geschwindigkeit ausgebildet ist) am oder im Motor angeordnet sein, insbesondere um die Motordrehzahl zu erfassen.

Der mindestens eine Sensor kann ausgebildet sein, Messwerte mit einer Frequenz von mindestens 5 Hz, vorzugsweise mindestens 10 Hz aufzunehmen. Er kann weiterhin ausgebildet sein, Messwerte mit einer Frequenz von höchstens 200 Hz oder höchstens 100 Hz aufzunehmen.

Die obige Aufgabe wird weiterhin vorzugsweise gelöst durch einen Kinderwagen oder Kinderwagengestell, umfassend mindestens einen Motor, insbesondere Elektromotor, zum unterstützenden Antreiben des Kinderwagen oder Kinderwagengestells, einen Schieber zum Schieben des Kinderwagen oder Kinderwagengestells, mindestens eine Kraft-Sensoreinrichtung (umfassend mindestens einen, insbesondere wie oben spezifizierten bzw. ausgeprägten Sensor) zum Erfassen einer Richtung und/oder eines Betrages einer Kraft und/oder einer Kraftkomponente, die auf den Schieber einwirkt, und/oder zum Erfassen einer aus dieser Kraft bzw. Kraftkomponente abgeleiteten Größe, insbesondere eines Drehmomentes und/oder einer zeitlichen Änderung der Kraft bzw. Kraftkomponente, mindestens eine Geschwindigkeits-Sensoreinrichtung (umfassend mindestens einen, insbesondere wie oben spezifizierten bzw. ausgeprägten Sensor) zur Bestimmung einer Geschwindigkeit des Kinderwagens bzw. Kinderwagengestells, und mindestens eine Steuereinrichtung, die derart konfiguriert ist, dass die Motorunterstützung abhängig von einem Vergleich der gemessenen Kraft und/oder Kraftkomponente und/oder der davon abgeleiteten Größe mit einem Kraftschwellenwert angepasst wird, wobei der Kraftschwellenwert abhängig von einem Vergleich der gemessenen Geschwindigkeit mit einem Geschwindigkeitsschwellenwert festgelegt wird.

Ein Gedanke der Erfindung beruht darauf, dass eine aktuell auf den Schieber einwirkende Kraft und eine aktuelle Geschwindigkeit, mit der das Kinderwagengestell sich bewegt, bestimmt werden. Für alle Messungen soll dabei vorzugsweise die positive Richtung immer die aktuelle Bewegungsrichtung des Kinderwagengestells sein - alle (gemessenen) Geschwindigkeiten müssen somit per Definition positiv sein. Die aktuelle auf den Schieber einwirkende Kraft wird mit einem Kraftschwellenwert verglichen, wobei zusätzlich ein Geschwindigkeitsschwellwert festgelegt wird.

Der Kraftschwellenwert wird weiter auf einen ersten positiven Wert gesetzt, wenn die aktuelle Geschwindigkeit kleiner als (alternativ: kleiner/gleich dem) Geschwindigkeitsschwellwert ist. Wenn die aktuelle Geschwindigkeit des Kinderwagens größer/gleich dem (alternativ: größer als der) Geschwindigkeitsschwellwert ist, wird der Kraftschwellenwert auf einen zweiten positiven Wert gesetzt. Der erste positive Wert ist vorzugsweise ungleich dem zweiten positiven Wert, vorzugsweise größer als dieser (kann aber auch kleiner sein).

Erfindungsgemäß wurde insbesondere erkannt, dass ein vorab fix festgelegter Kraftschwellenwert nachteilig sein kann. Es wird ggf. mit der Festlegung des Kraftschwellenwertes ein starres Ansprechverhalten des elektrischen Antriebes festgesetzt, das lediglich von der auf den Schieber einwirkende Kraft abhängt. Dies kann mitunter dazu führen, dass die Unterstützung des elektrischen Antriebs auch in Situationen ausgelöst wird, in denen keine Unterstützung hilfreich ist bzw. nicht erwünscht ist. Daneben kann es sein, dass der Antrieb unter ungünstigen Randbedingungen betrieben wird (z.B. hohe Last bei niedriger Drehzahl).

Erfindungsgemäß wird in verbesserter Weise sichergestellt, dass die Unterstützung durch den elektrischen Antrieb möglichst nur in Situationen erfolgt, in denen die Unterstützung erwünscht ist.

Der Geschwindigkeitsschwellwert kann kleiner als 4 km/h sein. Vorzugsweise liegt er bei mindestens 1 km/h und/oder höchstens bei 3 km/h, beispielsweise bei (ca.) 2 km/h.

Vorzugsweise ist der erste Wert für den Kraftschwellenwert höher als der zweite Wert des Kraftschwellenwertes. Besonders bevorzugt soll der erste Wert 150% bis 250%, z.B. (ca.) 200%, des zweiten Wertes betragen.

Der erste Wert kann z.B. größer oder gleich 20 N sein, oder größer oder gleich 25 N, oder größer oder gleich 30 N.

Der zweite Wert kann zwischen 8 N und 25 N liegen, bevorzugt zwischen 10 N und 20N. Er kann z.B. 15 N betragen oder 17 N.

Sobald die aktuell erfasste Kraft einen jeweiligen (insbesondere den in Abhängigkeit der aktuellen Geschwindigkeit relevanten) Kraftschwellenwert überschreitet, kann eine Unterstützung des Benutzers durch den Antrieb zugelassen werden (bzw. die Steuereinrichtung entsprechend konfiguriert sein).

Solange die aktuell erfasste Kraft einen (insbesondere den in Abhängigkeit der aktuellen Geschwindigkeit relevanten) Kraftschwellenwert nicht überschreitet, wird eine Unterstützung des Benutzers durch den Antrieb nicht zugelassen (bzw. ist die Steuereinrichtung vorzugsweise entsprechend konfiguriert). Dabei bedeutet ein Zulassen der Unterstützung noch nicht zwangsläufig (dies ist jedoch möglich), dass eine solche auch erfolgt. Diese kann ggf. noch von weiteren Parametern abhängen (oder, alternativ, nicht).

Vorzugsweise erfolgt eine Unterstützung des Benutzers durch den Antrieb nur dann, wenn (zumindest) sichergestellt ist, dass ein Rad sich dreht oder mehrere Räder sich drehen (bzw. ist die Steuereinrichtung entsprechend konfiguriert).

Vorzugsweise erfolgt eine Unterstützung des Benutzers durch den Antrieb nur dann, wenn basierend auf einer geeigneten Auswertung der Messwerte, insbesondere der Messwerte hinsichtlich einer zum Schieben aufgebrachten Kraft (bzw. von deren Komponenten und/oder von daraus abgeleiteten Größen) davon ausgegangen werden kann, dass ein menschlicher Benutzer den Kinderwagen schiebt. Die Steuereinrichtung kann dazu entsprechend konfiguriert sein.

Ausführungsgemäß wird der elektrische Antrieb zur Unterstützung derart angesteuert, dass die durchschnittliche aufzuwendende Kraft, die benötigt wird um den Kinderwagen zu schieben oder zu ziehen, konstant (zumindest für einen bestimmten Zeitabschnitt) auf einen vorab festgelegten Kraftwert geregelt wird. Vorzugsweise handelt es sich bei dem Kraftwert um den ersten oder den zweiten Kraftschwellenwert, besonders bevorzugt um den zweiten Kraftschwellenwert. Die Steuereinrichtung kann dazu entsprechend konfiguriert sein.

Die erfindungsgemäße Konfiguration der Steuereinrichtung bzw. das erfindungsgemäße Verfahren hat sich als besonders vorteilhaft erwiesen, da insbesondere bei einem gegenüber dem zweiten Kraftschwellenwert angehobenen ersten Kraftschwellenwert verhindert wird, dass ein häufiges, unerwünschtes Zu- und Abschalten der Unterstützung durch den elektrischen Antrieb stattfindet, insbesondere dann, wenn der Kinderwagen (fast auf der Stelle) vor und zurück geschaukelt wird, beispielsweise um ein Kind im Kinderwagen zu beruhigen.

Des Weiteren kann bei geringeren Geschwindigkeiten die Effizienz des elektrischen Antriebs geringer sein. Ein häufiges Zuschalten der Unterstützung in einem niedrigen Geschwindigkeitsbereich kann folglich dazu führen, dass die (ggf. sekundäre) Batterie, die den elektrischen Antrieb speist, schneller entladen wird, als wenn der elektrische Antrieb vorwiegend in einem Geschwindigkeitsbereich betrieben wird, in dem er vergleichsweise effizienter arbeitet.

Darüber hinaus kann es bei geringen Geschwindigkeiten des Kinderwagens tendenziell unklar sein, ob der Nutzer tatsächlich in diesem Augenblick eine Unterstützung durch den elektrischen Antrieb wünscht.

Mehrere Abstufungen (z. B. mindestens drei oder mindestens vier) für den Kraftschwellenwert in Abhängigkeit von der aktuellen Geschwindigkeit des Kinderwagens sind als weitere Ausführungsformen ebenfalls möglich.

Darüber hinaus kann (und dieser Gedanke wird auch für sich als unabhängig, optional als weiterbildend, beansprucht) der elektrische Antrieb durch eine Steuerungseinheit mit einem weichen Übergang angesteuert werden. Hierdurch wird vorzugsweise ein hartes Hinzu- oder Abschalten der Unterstützung durch den elektrischen Antrieb verhindert.

Eine unabhängige (ggf. weiterbildende) erfindungsgemäße Lösung liegt darin, eine/die Steuerung so einzustellen, dass nicht sofort die vollständige aufgrund der Randbedingungen errechnete Leistung (Zielleistung) abgerufen wird, sondern dass der Übergang zwischen der aktuellen Leistung (0 oder größer 0) und der Zielleistung in einem Zeitintervall kontinuierlich oder in mehreren diskreten Schritten erfolgt.

Die obige Aufgabe wird weiterhin vorzugsweise gelöst durch einen Kinderwagen oder Kinderwagengestell, umfassend mindestens einen Motor, insbesondere Elektromotor, zum unterstützenden Antreiben des Kinderwagen oder Kinderwagengestells, einen Schieber zum Schieben des Kinderwagen oder Kinderwagengestells, mindestens eine Kraft-Sensoreinrichtung (umfassend mindestens einen, insbesondere wie oben spezifizierten bzw. ausgeprägten Sensor) zum Erfassen einer Richtung und/oder eines Betrages einer Kraft und/oder einer Kraftkomponente, die auf den Schieber einwirkt, und/oder zum Erfassen einer aus dieser Kraft bzw. Kraftkomponente abgeleiteten Größe, insbesondere eines Drehmomentes und/oder einer zeitlichen Änderung der Kraft bzw. Kraftkomponente, mindestens eine Geschwindigkeits-Sensoreinrichtung (umfassend mindestens einen, insbesondere wie oben spezifizierten bzw. ausgeprägten Sensor) zur Bestimmung einer Geschwindigkeit des Kinderwagens bzw. Kinderwagengestells, und mindestens eine Steuereinrichtung, die derart konfiguriert ist, dass die Motorunterstützung abhängig von einem Vergleich der gemessenen Kraft und/oder Kraftkomponente und/oder der davon abgeleiteten Größe mit einem Kraftschwellenwert angepasst wird, wobei der Kraftschwellenwert abhängig von einem Vergleich der gemessenen Geschwindigkeit mit einem Geschwindigkeitsschwellenwert festgelegt wird.

Die Länge des Zeitintervalls kann maximal 2 s (zwei Sekunden), vorzugsweise maximal 1 s betragen. Zusätzlich oder alternativ kann die Länge des Zeitintervalls mindestens 0,01 s, vorzugsweise mindestens 0,05 s betragen.

Der weiche Übergang kann insbesondere so ausgestaltet sein, dass jedes Mal wenn ein Messwert aufgenommen und/oder von der Steuereinrichtung verarbeitet wird (also nach jeweils einer Periodendauer, wobei die Periodendauer der Kehrwert einer Frequenz ist, mit der ein Messwert aufgenommen bzw. verarbeitet wird) eine Anpassung der Motorleistung erfolgt, indem die Antriebsleistung um einen Teil der Differenz zwischen der aktuellen Leistung und der ermittelten Zielleistung angepasst wird. Der weiche Übergang wird also so realisiert, dass nicht die volle Differenz, sondern nur ein Anteil ausgeglichen wird. Die Zielleistung wird demzufolge nur erreicht, wenn sich die für die Ermittlung der Zielleistung relevanten Randbedingungen über einen ausreichend langen Zeitraum nicht ändern. Die Steuereinrichtung kann entsprechend konfiguriert sein.

Generell kann die Kraft-Sensoreinrichtung zum Erfassen von Messwerten mit einer vorbestimmten Frequenz ausgebildet sein. Alternativ oder zusätzlich kann die Steuereinrichtung zur Verarbeitung der Messwerte mit einer/der vorbestimmten Frequenz ausgebildet sein.

In dynamischen Fahrsituationen, z.B. wenn sich die Schiebekraft und/oder die Geschwindigkeit fortwährend ändern, kann es sein, dass eine ermittelte Zielleistung niemals erreicht wird.

Konkret kann die Schiebekraft in diskreten Schritten erfasst werden (z.B. in mindestens 20 Schritten und/oder in höchstens 2000 Schritten, vorzugsweise in 100 bis 1000 Schritten). Die Motorleistung kann ebenfalls in diskreten Schritten regelbar bzw. einstellbar sein (z.B. in mindestens 5 Schritten und/oder in höchstens 1000 Schritten, vorzugsweise in 50 bis 200 Schritten).

Für die Schiebekraft kann ein Zielwert vorgesehen sein, der insbesondere einer der oben genannten Kraftschwellen (vorzugsweise dem zweiten Wert des Kraftschwellenwertes) entspricht. Je nach Abweichung der gemessenen Schiebekraft vom Zielwert der Schiebekraft wird die Antriebsleistung vorzugsweise um eine vorbestimmte Anzahl von Schritten angepasst, um die Abweichung zu verringern.

Die Anpassung der Motorleistung kann linear von der Abweichung abhängen, vorzugsweise hängt sie jedoch überlinear (z.B. beinhaltend einen exponentiellen Zusammenhang) von der Abweichung ab. Mit anderen Worten soll vorzugsweise bei einer hohen Abweichung ein höherer Anteil der Abweichung kompensiert werden.

In einem Ausführungsbeispiel wird die Schiebekraft in 500 Schritten (Stufen) erfasst und die Antriebsleistung in 100 Schritten (Stufen) geregelt. Der Zielwert der Schiebekraft liegt bei 100.; d.h., wenn eine entsprechende Schiebekraft anliegt, wird die Motorleistung nicht angepasst. Liegt jedoch eine Schiebekraft von 483 an, so wird die Motorleistung um 32 Schritte erhöht. Liegt eine Schiebekraft von 330 an, so wird die Motorleistung um 16 Schritte erhöht. Liegt eine Schiebekraft von 238 an, so wird die Motorleistung um 8 Schritte erhöht. Liegt eine Schiebekraft von 183 an, so wird die Motorleistung um 4 Schritte erhöht. Liegt eine Schiebekraft von 150 an, so wird die Motorleistung um 2 Schritte erhöht. Liegt eine Schiebekraft von 130 an, so wird die Motorleistung um 1 Schritt erhöht.

Alle Schritte bzw. Abstände zwischen den einzelnen Stufen (jeweils für die Krafterfassung und/oder für die Antriebsansteuerung) sind vorzugsweise gleich groß.

Die obige Aufgabe wird weiterhin vorzugswiese gelöst durch ein Verfahren zur Steuerung eines Kinderwagens oder Kinderwagengestells, insbesondere wie oben und nachfolgend beschrieben, wobei eine Richtung und/oder ein Betrag einer Kraft und/oder einer Kraftkomponente, die auf einen Schieber einwirkt, und/oder eine aus dieser Kraft bzw. Kraftkomponente abgeleitete Größe, insbesondere ein Drehmoment und/oder eine zeitliche Änderung der Kraft bzw. Kraftkomponente erfasst wird, wobei eine Geschwindigkeit des Kinderwagens bzw. Kinderwagengestells bestimmt wird, und wobei die Motorunterstützung abhängig von einem Vergleich der gemessenen Kraft und/oder Kraftkomponente und/oder der davon abgeleiteten Größe mit einem Kraftschwellenwert angepasst wird, wobei der Kraftschwellenwert abhängig von einem Vergleich der gemessenen Geschwindigkeit mit einem Geschwindigkeitsschwellenwert festgelegt wird.

Die obige Aufgabe wird weiterhin vorzugswiese gelöst durch ein, insbesondere das obige, Verfahren zur Steuerung eines Kinderwagens oder Kinderwagengestells, insbesondere wie oben und nachfolgend beschrieben, wobei eine Richtung und/oder ein Betrag einer Kraft und/oder einer Kraftkomponente, die auf einen Schieber einwirkt, und/oder eine aus dieser Kraft bzw. Kraftkomponente abgeleitete Größe, insbesondere ein Drehmoment und/oder eine zeitliche Änderung der Kraft bzw. Kraftkomponente erfasst wird, wobei die Motorunterstützung weich angesteuert wird, insbesondere so eingestellt wird, dass nicht sofort eine vollständige aufgrund von Randbedingungen errechnete Zielleistung abgerufen wird, sondern dass der Übergang zwischen der aktuellen Leistung, von ggf. 0 oder größer 0, und der Zielleistung in einem Zeitintervall über mindestens einen Zwischenschritt oder mehrere Zwischenschritte oder zumindest zeitweise kontinuierlich erfolgt.

Weitere, bevorzugte, Verfahrensschritte der Erfindung sind weiter oben und nachstehend erläutert.

Weitere Ausführungsformen ergeben sich aus den Unteransprüchen.

Im nachfolgenden Abschnitt bis zur Figuren-Kurzbeschreibung werden weitere bevorzugte Merkmale der Erfindung beschrieben. Wenn in diesem Abschnitt ein Merkmal nicht als optional dargestellt wird, gilt dies nur für die Offenbarung dieses Abschnittes selbst. Insbesondere bedeutet dies nicht (zwingend), dass das jeweilige Merkmal im allgemeinen wesentlich bzw. zwingend für die vorliegende Erfindung ist, wie sie insbesondere in den Ansprüchen und weiter oben erläutert ist. Angaben, die nachfolgend das Kinderwagengestell betreffen sollen auch für den Kinderwagen gelten. Wenn also beispielsweise davon die Rede ist, dass das Kinderwagengestell einen Motor aufweist, soll damit ebenfalls offenbart sein, dass der Kinderwagen einen Motor aufweist.

Vorgeschlagen wird insbesondere ein Kinderwagengestell, umfassend mindestens einen Motor, insbesondere Elektromotor, zum Antreiben des Kinderwagengestells, mindestens einen Schieber zum Schieben des Kinderwagengestells und vorzugsweise mindestens eine Sensoreinrichtung, insbesondere Kraft-Sensoreinrichtung. Vorzugsweise ist die Sensoreinrichtung, insbesondere Kraft-Sensoreinrichtung zum Erfassen einer Richtung und/oder eines Betrages einer Kraft und/oder einer Kraftkomponente, die auf den Schieber einwirkt, und/oder zum Erfassen einer aus dieser Kraft bzw. Kraftkomponente abgeleiteten Größe, insbesondere einer zeitlichen Änderung der Kraft bzw. Kraftkomponente, ausgebildet.

Ein Aspekt liegt darin, dass eine Kraft-Sensoreinrichtung vorgesehen ist, die entweder die Richtung oder den Betrag (oder beides) einer Kraft und/oder einer Kraftkomponente (oder einer aus dieser Kraft oder Kraftkomponente abgeleiteten Größe) erfasst. Dadurch wird es ermöglicht, dass eine entsprechende Steuerung basierend auf dem Output der Sensoreinrichtung erfolgen kann. Unter Output einer Sensoreinrichtung ist insbesondere die Ausgabe eines gemessenen Wertes und/oder die Ausgabe eines Mittelwertes aus mehreren gemessenen Werten zu verstehen.

Die Steuerung kann dann intern (durch eine an oder in dem Kinderwagengestell vorgesehene Steuereinrichtung) und/oder extern durch eine separate Steuereinrichtung (wie beispielsweise ein mobiles Endgerät, insbesondere Smartphone) erfolgen. Dabei ist es jedoch zunächst bedeutsam, dass überhaupt entsprechende Daten betreffend die Kraft bzw. von mit der Kraft zusammenhängenden Größen generiert werden können. Insofern ist es vorteilhaft, jedoch nicht unbedingt notwendig, dass das Kinderwagengestell (oder der entsprechende Kinderwagen) selbst eine Steuereinrichtung aufweist. Insgesamt wird ein bedienerfreundliches und einfach herzustellendes Kinderwagengestell mit Motorunterstützung vorgeschlagen.

Der Schieber ist vorzugsweise einstückig (ggf. mit gegeneinander bewegbaren Einzelteilen) ausgebildet. Der Schieber kann insbesondere einen horizontalen Handgriff aufweisen. Alternativ kann der Schieber auch mehrstückig (z.B. zweistückig), beispielsweise mit mehreren voneinander getrennten Handgriffen ausgebildet sein.

Mit der Kraft-Sensoreinrichtung sind insbesondere mindestens zwei verschiedene Kraft-Richtungen (beispielsweise vorwärts und rückwärts und/oder nach oben und nach unten) feststellbar und ggf. hinsichtlich Ihres Betrages bestimmbar oder mindestens vier Richtungen (beispielsweise vorwärts, rückwärts, nach oben und nach unten) feststellbar und ggf. hinsichtlich Ihres Betrages bestimmbar. Gegebenenfalls können mit der Kraft-Sensoreinrichtung mindestens zwei verschiedene Beträge (>0), vorzugsweise mindestens vier verschiedene Beträge, beispielsweise ein Kontinuum von Beträgen der Kraft (bzw. Kraftkomponente bzw. daraus abgeleiteten Größe) erfasst werden. In jedem Fall wird durch eine derartige Kraft-Sensoreinrichtung auf einfache Art und Weise Information bereitgestellt, die vorteilhaft genutzt werden kann, um den Motor zum Antreiben des Kinderwagens bzw. des Kinderwagengestells zu steuern.

Vorzugsweise weist das Kinderwagengestell bzw. der Kinderwagen mehrere Motoren, insbesondere Elektromotoren, zum Antreiben des Kinderwagengestells auf. Vorzugsweise ist mindestens zwei oder genau zwei Rädern (beispielsweise einem linken und einem rechten Rad bzw. einem ersten seitlichen Rad und einem zweiten seitlichen Rad) jeweils ein Motor zugeordnet. Vorzugsweise kann eine Steuereinrichtung zur individuellen Ansteuerung der Motoren vorgesehen sein. Alternativ oder zusätzlich kann eine Sensoreinrichtung zum Erfassen einer Schiebekraft und/oder Bewegung des Kinderwagengestells vorgesehen sein. Durch mehrere (insbesondere mindestens oder genau zwei) Motoren kann der Schiebekomfort insbesondere bei Kurvenfahrt verbessert werden, ohne dass dazu aufwändige Maßnahmen getroffen werden müssten (wie beispielsweise bei nur einem Motor mit einem Differentialgetriebe).

Soweit nicht anders angegeben sollen unter einem Schieben bzw. einer Schiebekraft insbesondere Aktionen bzw. Kräfte verstanden werden, die sowohl vorwärts als auch rückwärts gerichtet sein können (auch wenn man bei letzterem auch von einem Ziehen bzw. einer Zugkraft sprechen kann).

Insoweit (zwei) Kräfte miteinander verglichen werden und ausgesagt wird, dass die (beiden) Kräfte gleich bzw. verschieden sind, soll dies im Allgemeinen als Abkürzung für "gleich bzw. verschieden im Hinblick auf Richtung und/oder Betrag der Kräfte" verstanden werden - es sei denn, es ergibt sich aus dem Zusammenhang, dass die Richtung vorgegeben ist (wie z.B. bei einer "rückwärtsgerichteten Kraft"); dann soll sich eine Angabe über gleiche bzw. verschiedene Kräfte auf die Beträge der Kräfte beziehen.

Die mindestens eine (Kraft-) Sensoreinrichtung kann an und/oder in dem Schieber, insbesondere einem Handgriff des Schiebers, angeordnet sein und/oder in und/oder nahe einem Schieberbefestigungsbereich angeordnet sein. Unter einem Schieberbefestigungsbereich ist insbesondere ein Bereich zu verstehen, an dem der Schieber an einem Hauptkörper des Kinderwagengestells angebracht ist. Unter einer Anordnung nahe zu dem Schieberbefestigungsbereich ist insbesondere eine Anordnung in einem Abstand von weniger als 10 cm, vorzugsweise weniger als 5 cm gegenüber dem Schieber zu verstehen (wobei bei einem sich relativ bewegenden Schieber hier insbesondere der Minimalabstand gemeint ist).

Gemäß einem optionalen Aspekt der Erfindung wird ein Verfahren zur Steuerung eines Kinderwagengestells, insbesondere der oben (und nachfolgend) beschriebenen Art oder eines Kinderwagens der oben (und nachfolgend) beschriebenen Art vorgeschlagen, wobei eine Richtung und/oder ein Betrag einer Kraft und/oder einer Kraftkomponente, die auf einen Schieber einwirkt, und/oder eine aus dieser Kraft bzw. Kraftkomponente abgeleitete Größe, insbesondere eine zeitliche Änderung der Kraft bzw. Kraftkomponente erfasst wird. Insoweit weiter oben und nachfolgend funktionale Merkmale des Kinderwagengestells bzw. Kinderwagens beschrieben werden, sollen diese so verstanden werden, dass ein entsprechender Verfahrensschritt durchgeführt werden kann. Insofern sind verfahrensmäßig die entsprechenden Vorrichtungsmerkmale (wie beispielsweise Kraft-Sensoreinrichtung) nicht unbedingt entscheidend, sondern die Verfahrensschritte als solche (also beispielsweise das Erfassen einer Richtung und/oder eines Betrages einer Kraft). Selbstverständlich können auch innerhalb des Verfahrens entsprechende Vorrichtungsmerkmale (wie beispielsweise eine Kraft-Sensoreinrichtung), wie weiter oben und nachfolgend beschrieben, vorliegen.

Vorzugsweise ist mindestens eine Steuerungseinrichtung vorgesehen, die mit der mindestens einen (Kraft-) Sensoreinrichtung in Wirkverbindung steht, insbesondere derart, dass ein Output des mindestens einen Sensors zur Steuerung des mindestens einen Motors herangezogen wird. Dadurch kann eine einfache und zuverlässige Erfassung der Kraft (oder sonstigen Größe, wie beispielsweise der aktuellen Bewegung) erfolgen.

In einer Ausführungsform ist die mindestens eine Sensoreinrichtung ausgebildet, auf den Schieber einwirkende Kräfte und/oder Kraftkomponenten und/oder daraus abgeleitete Größe an mindestens zwei verschiedenen Orten zu erfassen. Insbesondere kann diese Erfassung an einer ersten (z. B. linken) und einer zweiten (z. B. rechten) Seite des Schiebers erfolgen, insbesondere einer ersten (z. B. linken) und einer zweiten (z. B. rechten) Seite eines Handgriffs und/oder an zwei verschiedenen, insbesondere jeweils seitlich angeordneten, Handgriffen. Insoweit hier und im Folgenden von einer linken oder rechten Seite die Rede ist, ist damit insbesondere eine linke bzw. rechte Seite gemeint, die sich aus der Blickrichtung des das Kinderwagengestell bzw. den Kinderwagen bedienenden Person ergibt.

In einer konkreten Ausführungsform ist die Sensoreinrichtung ausgebildet, Kraftkomponenten in Bewegungsrichtung und/oder entgegen der Bewegungsrichtung (jeweils horizontal) und/oder nach oben und/oder nach unten (jeweils vertikal) zu bestimmen. Alternativ oder zusätzlich können entsprechende Komponenten einer zeitlichen Ableitung (bzw. einer zeitlichen Änderung) bestimmt werden.

Wenn wirkende Kräfte (und/oder Kraftkomponenten und/oder kraftableitende Größen) an mehreren verschiedenen Orten erfasst werden, kann die Steuerungseinrichtung so ausgebildet sein, dass die entsprechenden Antriebsräder (bzw. ggf. zugeordneten Motoren) angesteuert werden, beispielsweise abhängig von Größe und Dauer der (insbesondere horizontalen) angreifenden Kräfte (und/oder ihrer zeitlichen Änderungen) und/oder abhängig davon, ob die (insbesondere horizontalen) Kräfte (und/oder ihre zeitlichen Änderungen) in dieselbe Richtung weisen. Ein Antriebsrad (oder entsprechend zugeordneter Motor) kann abhängig von der Kraft angesteuert werden, die an seiner Seite anliegt (und/oder der zeitlichen Änderung dieser Kraft) und/oder an der Kraft (und/oder ihre zeitliche Änderung), die an der anderen (gegenüberliegenden) Seite anliegt.

Die Steuerungseinrichtung ist vorzugsweise zur Steuerung und/oder Regelung der Leistung des mindestens einen Motors ausgebildet, insbesondere auf Grundlage des Outputs der mindestens einen Sensoreinrichtung, beispielsweise in diskreten Stufen und/oder kontinuierlich.

Weiterhin kann die Steuerungseinrichtung derart ausgebildet sein, dass mindestens ein Motor bei Überschreiten einer ersten Schwelle der Kraft und/oder Kraftkomponente und/oder daraus abgeleiteten Größe, gestartet wird. Unter einem Starten des Motors ist insbesondere zu verstehen, dass der Motor Leistung zum Antreiben des Kinderwagengestells bereitstellt. In diesem Sinne ist ein Anschalten des Motors (der dann beispielsweise im Leerlauf läuft) noch kein Starten. Unter einem Starten kann jedoch ggf. auch ein erstmaliges Anschalten (Energieversorgung) des Motors gemeint sein.

Die Steuerungseinrichtung kann derart ausgebildet sein, dass mindestens ein Motor bei Überschreiten einer zweiten Schwelle der Kraft und/oder Kraftkomponente (beispielsweise einer Komponente nach oben oder unten) und/oder der daraus abgeleiteten Größe, gestoppt wird oder auf konstante Leistung gehalten wird. Unter einem Stoppen des Motors ist insbesondere ein Versetzen des Motors in einen Zustand zu verstehen, in dem dieser den Kinderwagen nicht mehr antreibt. Der Motor kann ggf. noch (beispielsweise im Leerlauf) weiterlaufen. Es kann jedoch auch ein endgültiges Ausschalten (beispielsweise eine Energieunterbrechung zur Versorgung des Motors) verstanden werden. Die zweite Schwelle kann betragsmäßig größer sein als die erste Schwelle.

Weiterhin kann die Steuerungseinrichtung derart ausgebildet sein, dass mindestens ein Motor bei Überschreiten einer Schwelle F_{d} einer nach unten wirkenden Kraft und/oder bei Überschreiten einer Schwelle Fᵤ einer nach oben wirkenden Kraft, wobei F_{d} und Fᵤ ggf. (betraglich) gleich oder verschieden sind, und/oder bei Überschreiten einer Schwelle F_{f2} einer vorwärtswirkenden Kraft und/oder bei Überschreiten einer Schwelle Fᵣ₂ einer rückwärtswirkenden Kraft, wobei F_{f2} und Fᵣ₂ ggf. (betraglich) gleich oder verschieden sind, gestoppt wird oder auf einer konstanten Leistung gehalten wird, wobei F_{f2} und/oder Fᵣ₂ vorzugsweise größer ist, insbesondere 2-mal oder 5-mal oder 20-mal so groß ist als/wie Fᵤ und/oder F_{d}. Vorzugsweise ist die Steuerungseinrichtung derart ausgebildet, dass der Motor bei einem Unterschreiten (bei vorherigem Überschreiten) von F_{f2}, Fᵣ₂, Fᵤ bzw. F_{d} (neuerlich) gestartet wird.

Die Steuerungsfunktion kann weiterhin derart ausgebildet sein, dass mindestens ein Motor bei Überschreiten einer Schwelle F_{f1} einer vorwärtswirkenden Kraft und/oder bei Überschreiten einer Schwelle Fᵣ₁ einer rückwärtswirkenden Kraft, wobei F_{f1} und Fᵣ₁ ggf. (betraglich) gleich oder verschieden sind (und/oder ggf. bei Überschreiten einer Schwelle einer nach unten wirkenden Kraft und/oder bei Überschreiten einer Schwelle einer nach oben wirkenden Kraft wobei die Schwelle der nach unten wirkenden Kraft und die Schwelle der nach oben wirkenden Kraft ggf. gleich oder verschieden sind) gestartet wird, , wobei vorzugsweise F_{f1} (betraglich) kleiner ist als F_{f2} und/oder vorzugsweise Fᵣ₁ (betraglich) kleiner als Fᵣ₂ ist.

Alternativ oder zusätzlich kann die Steuerungseinrichtung derart ausgebildet sein, dass, wenn eine (horizontale) Kraft auf eine der beiden Seiten positiv ist und eine (horizontale) Kraft auf der anderen Seite negativ ist (was einer Drehung bzw. Kurve des Kinderwagens entsprechen kann) und/oder wenn eine zeitliche Änderung der (horizontalen) Kraft auf der einen Seite positiv ist und eine zeitliche Änderung der (horizontalen) Kraft auf der anderen Seite negativ ist (resultierend in einer Drehung bzw. Kurve des Kinderwagens), die Antriebsräder (bzw. entsprechend zugeordnete Motoren) derart angesteuert werden, dass nur eines der Antriebsräder (Motoren) Unterstützung leistet und/oder so dass die Unterstützungskraft einen vorbestimmten Wert nicht überschreitet oder dass die Unterstützung beider Motoren (vollständig) gestoppt wird oder zumindest deutlich reduziert wird.

Das Kinderwagengestell weist vorzugsweise mindestens einen Geschwindigkeitssensor und/oder mindestens einen Kurvenfahrtsensor auf. Der Geschwindigkeitssensor ist insbesondere derart ausgebildet, dass ein Betrag (und ggf. eine Richtung) einer aktuellen Geschwindigkeit (des Kinderwagengestells gegenüber einem Untergrund) festgestellt werden kann. Der Kurvenfahrtsensor ist vorzugsweise so ausgebildet, dass eine Krümmung einer Drehung bzw. Kurve (im vom Kinderwagengestell zurückgelegten Weg) feststellbar ist. Die Steuerungseinrichtung kann dann ggf. so ausgebildet sein, dass die Unterstützung des entsprechende Motors gestoppt wird, wenn eine bestimmte Geschwindigkeit überschritten und/oder eine bestimmte Kurvenkrümmung unterschritten wird. Dadurch wird insgesamt die Zuverlässigkeit und Sicherheit bei der Bedienung des Kinderwagens verbessert.

Die Steuerungseinrichtung kann derart ausgebildet sein, dass ein Quotient aus einer Schiebekraft oder einer (insbesondere horizontalen) Schiebekraftkomponente und einer Unterstützungskraft des mindestens einen Motors konstant ist, z. B. 1 oder größer 1 oder größer 2 oder größer 3 oder kleiner 1 ist, oder variabel ist, z. B. derart, dass die Unterstützungskraft mehr oder weniger als linear mit der Schiebekraft oder der (insbesondere horizontalen) Schiebekraftkomponente zunimmt. Die Unterstützungskraft kann beispielsweise polynomisch oder exponentiell oder logarithmisch mit der Schiebekraft zunehmen.

Weiterhin kann die Steuerungsreinrichtung derart ausgebildet sein, dass ein Quotient aus einer zeitlichen Änderung der Schiebekraft oder einer zeitlichen Änderung einer (insbesondere horizontalen) Schiebekraftkomponente und einer zeitlichen Änderung der Unterstützungskraft des mindestens einen Motors konstant ist, z. B. 1 oder größer 1 oder größer 2 oder größer 3 oder kleiner 1 ist oder variabel ist, z. B. derart, dass die zeitliche Änderung der Unterstützungskraft mehr oder weniger als linear mit der zeitlichen Änderung der Schiebekraft oder der Schiebekraftkomponente zunimmt. Beispielsweise kann die zeitliche Änderung der Unterstützungskraft polynomisch oder exponentiell oder logarithmisch etc. mit der zeitlichen Änderung der Schiebekraft oder der zeitlichen Änderung der Schiebekraftkomponente zunehmen.

Besonders bevorzugt nimmt die Unterstützungskraft (bzw. die zeitlich Änderung der Unterstützungskraft) mehr als (nur) linear mit der Schiebekraft oder Schiebekraftkomponente (bzw. mit der zeitlichen Änderung der Schiebekraft oder zeitlichen Änderung der Schiebekraftkomponente) zu.

Die oben (und nachfolgend) beschriebenen Schwellwerte und Grenzen können einen vorbestimmten festen Wert aufweisen oder geändert werden, beispielsweise durch einen selbstlernenden Algorithmus.

Vorzugsweise ist die Steuerungseinrichtung derart ausgebildet, dass die Antriebsleistung des mindestens einen Motors gedrosselt oder gestoppt wird, wenn eine Bremse, insbesondere Verzögerungsbremse (Betriebsbremse) oder Feststellbremse betätigt wird.

Vorzugsweise ist der Schieber und/oder ein Abschnitt des Schiebers (insbesondere derjenige Abschnitt des Schiebers, der zumindest teilweise die Sensoreinrichtung aufweist) über einen Bewegungsbereich vorzugsweise frei, insbesondere ohne eine Entrastung durchführen zu müssen, bewegbar, vorzugsweise gegen eine Rückstellkraft.

Unter der Bewegung in diesem Sinne ist insbesondere nicht eine Bewegung zur (reinen) Höhenverstellung des Schiebers zu verstehen, um das Kinderwagengestell an die Größe der bedienenden Person anzupassen, sondern insbesondere eine (freie) Bewegung, die insbesondere der Kraftmessung dienen kann und/oder als Feedback für den Benutzer, dass eine Motorunterstützung wirkt, dienen kann. Insofern kann hier ein "Double-Feedback" vorliegen, einerseits durch die wirkende Unterstützung des Motors (die vom Benutzer als solche erkannt werden kann) und gleichzeitig die Bewegung des Schiebers (bzw. Schiebeabschnittes). Durch ein und dieselbe Bewegung kann also insbesondere eine Kraft-Messung erfolgen und gleichzeitig eine Double-Feedback-Funktion realisiert werden. Vergleicht man dies beispielsweise mit einem Piezo-Sensor (als vergleichsweise kompakte Sensoreinrichtung) wird im vorliegenden Fall ein vergleichsweise gutes Feedback an den Benutzer gegeben, was dem Benutzer die Bedienung des Kinderwagens erleichtert (und der Benutzer nicht nur darauf angewiesen ist, die Motorunterstützung als solche, die ggf. vergleichsweise gering sein kann, zu erkennen).

Die (freie) Bewegung des Schiebers (bzw. Schiebeabschnittes) kann beispielsweise mindestens 2 mm oder mindestens 10 mm oder mindestens 20 mm betragen. Vergleicht man eine derartige Kraft-Sensoreinrichtung beispielsweise mit einem einfachen Piezo-Sensor, wird eine deutliche Verbesserung erzielt, da präzisere Informationen bereitgestellt werden können. Ein Piezo-Sensor kann nur vergleichsweise kleine Relativ-Bewegungen feststellen (weit unter 1 mm).

Im Falle einer translatorischen Bewegung ist damit insbesondere der Bewegungsweg gemeint; im Falle einer rotatorischen Bewegung bzw. Verschwenkung ist damit der Weg eines Punktes des verschwenkten Abschnittes gemeint, der den größten Weg aller Punkte durchführt. In einer Ausführungsform kann der Schieber oder ein oberer Abschnitt des Schiebers (z.B. Handgriff) schwenkbar um einen Befestigungsbereich sein. Alternativ (oder zusätzlich) kann ein (oberer) Abschnitt des Schiebers gegenüber einem unteren Abschnitt translatorisch verschiebbar sein. Weiterhin kann der gesamte Schieber (translatorisch) verschiebbar sein.

Die mindestens eine Sensoreinrichtung kann zum Erfassen eines (zeitlichen) Verlaufs der Kraft (bzw. Kraftkomponente) und/oder der daraus abgeleiteten Größe ausgebildet sein. Dadurch kann die Steuerung weiter verbessert werden. Beispielsweise kann es dann ermöglicht sein, Schwellwerte für Kräfte (bzw. Kraftkomponenten) und/oder ihre zeitlichen Änderungen zu definieren sowie Schwellwerte für eine Zeit, wobei der Schwellwert für die Zeit eine Dauer einer (anliegenden) Kraft (bzw. Kraftkomponente) und/oder ihrer zeitlichen Änderung sein kann, in der der Schwellwerte (die Schwellwerte) der Kraft (bzw. Kraftkomponte) und/oder ihrer zeitlichen Änderung überschritten (oder unterschritten) wird (werden).

Unter einer zeitlichen Änderung kann grundsätzlich die zeitliche Ableitung der Kraft (bzw. Kraftkomponente) verstanden werden (im mathematischen Sinne). Eine zeitliche Änderung kann jedoch auch als ΔF/Δt verstanden werden (mit endlichen nicht-infinitesimalen Δt im Bereich von beispielsweise 100 Millisekunden bis 1 Sekunde).

Die jeweilige Steuereinrichtung ist vorzugsweise eine Regeleinrichtung, insbesondere eine Regeleinrichtung zur kontinuierlichen (ggf. linearen) Regelung der Leistung des mindestens einen Motors, vorzugsweise eine PID-Regeleinrichtung (wobei PID für *proportional integral derivative* steht).

Vorzugsweise ist mindestens eine Bremseinrichtung, insbesondere Verzögerungsbremseinrichtung und/oder Feststellbremseinrichtung, vorgesehen. Die Verzögerungsbremseinrichtung ist vorzugsweise ausgebildet, kinetische Energie des Kinderwagengestells bzw. Kinderwagens (mit Kind) zum Abbremsen zu nutzen (und insbesondere in elektrische Energie umzuwandeln). Alternativ oder zusätzlich kann eine/die Steuereinrichtung vorgesehen und derart ausgebildet sein, dass die Feststellbremseinrichtung automatisch nach einer vorbestimmten Zeit, vorzugsweise zwischen 3 Sekunden und 5 Minuten (vorzugsweise zwischen 10 Sekunden und 30 Sekunden), nach einem (vollständigen) Stillstand des Kinderwagengestells (nach vorheriger Bewegung), aktiviert wird. Alternativ oder zusätzlich kann eine/die Steuereinrichtung derart vorgesehen und ausgebildet sein, dass die Feststellbremseinrichtung automatisch nach Erreichen eines Stillstandes oder einer vergleichsweise geringen Geschwindigkeit nach vorheriger Fahrt aktiviert wird.

Die Bremseinrichtung kann insbesondere zweistufig ausgebildet sein, vorzugsweise derart, dass sowohl eine Verzögerungsbremse (Betriebsbremse) als auch eine Feststellbremse zum Feststellen einer Parkposition (wenn der Kinderwagen vollständig gestoppt ist) vorliegt. Die Verzögerungsbremse kann derart ausgebildet sein, dass der Kinderwagen durch Reibung (an einem oder mehreren Rädern) gebremst wird (wobei kinetische Energie in Wärme umgewandelt wird). Bevorzugt kann jedoch zumindest ein Motor als Generator genutzt werden, um den Kinderwagen abzubremsen (wobei kinetische Energie in elektrische Energie umgewandelt wird, die wiederum zur Aufladung einer oder mehrerer Batterien genutzt werden kann). Für die Verzögerungsbremse kann eine beliebige Betätigungseinrichtung vorgesehen sein, beispielsweise ein hand- oder fingerbetätigbarer Hebel (am Schieber bzw. Handgriff) oder eine andere Vorrichtung (beispielsweise ein Dreh-Griff oder ein Fuß-Pedal oder dergleichen). Es ist auch ggf. möglich, dass eine graphische Benutzeroberfläche (z. B. Display, insbesondere Touchscreen) mit dem Kinderwagen verbunden ist und/oder einen Empfänger aufweist, um mit einem externen Gerät (z. B. einem Smartphone mit einer entsprechenden App) verbindbar ist. Die Betätigungseinrichtung (oder der Empfänger) kann mit der Verzögerungsbremse (durch geeignete Mittel) verbunden sein, um die Verzögerungsbremse zu betätigen, d.h. die durch den Benutzer gewünschte Bremskraft aufzubringen (die null oder größer null sein kann, insbesondere mehr als 2 oder mehr als 5 verschiedene Werte größer null einnehmen kann). Die Verzögerungsbremse kann solange wirken, wie die Betätigungseinrichtung betätigt wird, oder bis der Kinderwagen gänzlich gestoppt wird und dann ggf. die Feststellbremse wirkt.

Die Feststellbremse kann als eine Arretierung ausgebildet sein, die verhindert, dass eine oder mehrere Räder rotieren. Beispielsweise kann die Feststellbremse einen Pin umfassen, der mit Speichern oder Rasteinrichtungen (beispielsweise Nuten), die in einer Seitenfläche des Rades vorgesehen sind, zusammenwirkt.

Die Feststellbremse kann ggf. (automatisch) aktiviert werden unmittelbar nachdem oder eine vorbestimmte Zeit nachdem das Kinderwagengestell bzw. der Kinderwagen, insbesondere durch die Verzögerungsbremse, gestoppt wurde.

Vorzugsweise ist die mindestens eine Feststellbremseinrichtung (nur) elektrisch bzw. elektronisch aktivierbar und (nur) manuell lösbar.

Die Feststellbremseinrichtung kann in einem gelösten Zustand vorgespannt sein und in einem aktivierten Zustand nicht oder (nur) geringer vorgespannt sein. Durch diese Maßnahmen wird die Sicherheit bei der Bedienung verbessert.

Die Betätigung der Feststellbremse kann auf verschiedene Art und Weise durchgeführt werden, beispielsweise über einen Schalter, z. B. Schiebeschalter oder Druckschalter oder ein Fußpedal oder dergleichen.

Insbesondere wenn die Feststellbremse im aktivierten Zustand vorgespannt ist, ist ein Lösen der Feststellbremse (nur) manuell möglich, wohingegen ggf. eine Aktivierung der Bremse (nur) elektronisch bzw. elektrisch ermöglicht ist.

Eine/die Sensoreinrichtung, insbesondere die Kraft-Sensoreinrichtung kann vorgesehen sein und die/eine Steuereinrichtung kann derart ausgebildet sein, dass mindestens eine Bremseinrichtung, insbesondere die Verzögerungsbremseinrichtung und/oder die Feststellbremseinrichtung, aktiviert wird, wenn eine den Kinderwagen bedienende Person einen Kontakt, z. B. über die Hand und den Handgriff, löst. Vorzugsweise wird die Verzögerungsbremse mit erhöhter (maximaler) Kraft aktiviert und/oder die Feststellbremse aktiviert (Notbremsung), wenn festgestellt wird, dass die den Kinderwagen bedienende Person keinen Kontakt (mehr) mit dem Kinderwagen hat und der Kinderwagen sich dennoch bewegt.

In einer Ausführungsform ist die Steuereinrichtung derart ausgebildet, dass die Bremseinrichtung aktiviert wird, wenn die Kraft-Sensoreinrichtung eine Kraft erfasst, die (zumindest partiell) entgegen der aktuellen Bewegungsrichtung des Kinderwagengestells gerichtet ist. Alternativ kann in einem solchen Fall eine Motorunterstützung, wie oben beschrieben, erfolgen. Vorzugsweise wird der Motor im Falle einer Abbremsung als Stromgenerator genutzt.

Mindestens eine Anzeige- bzw. Signaleinrichtung kann vorgesehen sein, die den Benutzer des Kinderwagengestells darauf hinweist, dass eine Motorunterstützung vorliegt bzw. vorliegen kann. Gegebenenfalls kann eine erste Anzeige- bzw. Signaleinrichtung darauf hinweisen, dass aktuell eine Motorunterstützung vorliegt, und eine zweite Anzeige- bzw. Signaleinrichtung darauf hinweisen, dass eine Motorunterstützung vorliegen kann, in dem Sinne, dass abhängig von weiteren Parametern (beispielsweise einer maximalen Geschwindigkeit oder dergleichen) entweder eine Motorunterstützung vorliegt oder (wenn die Parameter entsprechend sind) nicht.

Insgesamt kann der Kinderwagen bzw. das Kinderwagengestell der vorliegenden Erfindung eine komfortable Unterstützung beim Schieben (bzw. Ziehen) des Kinderwagens ermöglichen. Insbesondere ist es möglich, Werte F_{f1} und/oder Fᵣ₁ einzustellen, die (im Wesentlichen) diejenigen Kräfte definieren, die (maximal) von dem Benutzer (unabhängig von der Situation) eingesetzt werden müssen. Wenn man mit einem Kinderwagen startet, der stillsteht, wird der Benutzer anfangen zu schieben (oder zu ziehen). Daraufhin wird die horizontale Komponente der Schiebekraft bzw. Zugkraft größer als null werden. Zu dem Zeitpunkt, an dem F_{f1} erreicht wird, kann der Motor beginnen, den Benutzer (mit minimaler Leistung) zu unterstützen. Wenn beispielsweise die horizontale Komponente der Schiebe- bzw. Zugkraft weiter ansteigt (d.h. ΔF_{inh/}Δt>0) wird die Unterstützungskraft auch ansteigen (d.h. ΔFₛ/Δt>0). Dadurch kann die horizontale Komponente der Kraft (im Wesentlichen) konstant bei F_{f1} gehalten werden (zumindest wenn man ein Überschwingen nicht berücksichtigt). Selbstverständlich kann, wenn eine Bedingung zum Stoppen der MotorUnterstützung vorliegt, ggf. eine größere Kraft notwendig sein.

Fᵤ kann zwischen 0 und 25 N, vorzugsweise zwischen 5 N und 15 N liegen. F_{d} kann zwischen 10 N und 50 N, vorzugsweise zwischen 20 N und 40 N liegen. F_{f1} kann zwischen 0 und 25 N, vorzugsweise zwischen 5 N und 15 N liegen. Fᵣ₁ kann zwischen 0 und 25 N, vorzugsweise zwischen 5 N und 15 N liegen. F_{f2} und/oder Fᵣ₂ kann/können zwischen 25 N und 500 N, vorzugsweise zwischen 50 N und 200 N liegen.

F_{f1}, Fᵣ₁, F_{f2} und/oder Fᵣ₂ können ggf. durch den Benutzer vorgegeben werden, beispielsweise über eine Schnittstelle, wie beispielsweise eine graphische Benutzeroberfläche und/oder ein Smartphone (bzw. eine Smartphone-App). Gegebenenfalls können minimale und maximale Werte (herstellerbedingt) vorgegeben sein, um Sicherheitsproblematiken zu vermeiden und/oder um die Nutzungsdauer einer Batterie zu verlängern.

Nachfolgend wird die Erfindung anhand von Ausführungsbeispielen beschrieben, die anhand der Abbildungen näher erläutert werden. Hierbei zeigen:
- Fig. 1: ein Ablaufdiagramm eines Ausführungsbeispiels der vorliegenden Erfindung;
- Fig. 2: Diagramm: Kraft über der gemessenen Geschwindigkeit v;
- Fig. 3: Diagramm: Anpassung P der Unterstützung des elektrischen Antriebs über der von außen auf den Schieber einwirkenden Kraft F;
- Fig. 4: eine schematische Schrägansicht eines erfindungsgemäßen Kinderwagengestells; und
- Fig. 5: eine Seitenansicht des Kinderwagengestells gemäß Fig. 4.

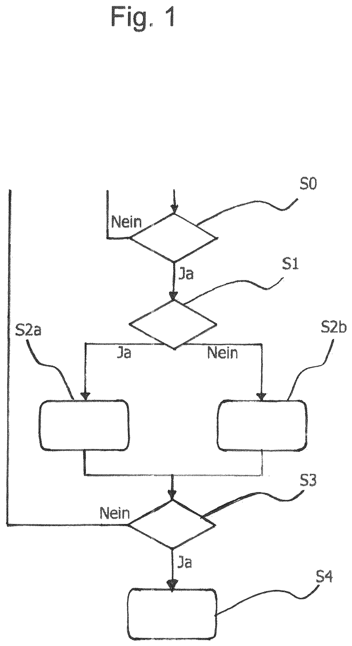

In Fig. 1 ist ein Ablaufdiagramm eines Ausführungsbeispiels der vorliegenden Erfindung gezeigt. Im (optionalen) Schritt S0 wird zunächst abgefragt, ob sich die Räder (Hinterräder), die durch den elektrischen Antrieb zusätzlich angetrieben werden (die Unterstützung), überhaupt bewegen (drehen). Falls dies der Fall ist, wird in Schritt S1 abgefragt, mit welcher Geschwindigkeit v sich der Kinderwagen bewegt.

Die Geschwindigkeit kann beispielsweise durch einen separaten Geschwindigkeitssensor bestimmt werden, oder anhand der aktuellen Motordrehzahl in Verbindung mit den physikalischen Abmessungen des Rads (Hinterrads) und ggfs. Zwischengetriebeübersetzungen berechnet werden.

In Schritt S1 wird anhand der bestimmten, aktuellen Geschwindigkeit des Kinderwagens entschieden, ob der Kraftschwellenwert auf seinen ersten Wert (beispielsweise 25N oder 30N) gesetzt wird (Schritt S2a), oder ob der Kraftschwellenwert auf seinen zweiten Wert (beispielsweise 17N) gesetzt wird (Schritt S2b). Wenn die Geschwindigkeit in Schritt S1 unter der Geschwindigkeitsschwelle liegt (z.B. von größer 0,000m/s bis 0,556m/s), wird der Kraftschwellenwert auf seinen ersten Wert gesetzt, ansonsten wird sein zweiter Wert verwendet.

In Schritt S3 wird nun die gemessene, aktuelle Kraft, die von außen auf den Schieber einwirkt, mit dem Kraftschwellenwert aus Schritt S2a oder S2b verglichen. Wenn der entsprechende Kraftschwellenwert nicht überschritten ist, wird zu Schritt S0 zurückgekehrt. Wenn in Schritt S3 der Kraftschwellenwert aus Schritt S2a oder S2b überschritten wird, so wird in Schritt S4 der elektrische Antrieb angesteuert (eine Unterstützung durch den elektrischen Antrieb initiiert oder angepasst).

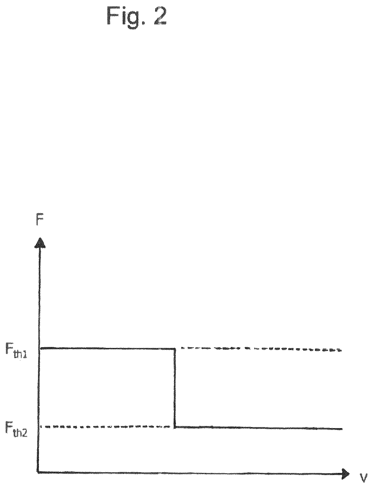

In Fig. 2 ist die Kraft über der gemessenen Geschwindigkeit v aufgetragen. Wenn die gemessene Geschwindigkeit unter dem Geschwindigkeitsschwellwert liegt, wird der Kraftschwellenwert auf seinen ersten Wert Fₜₕ₁ gesetzt. Wenn die gemessene Geschwindigkeit v über dem Geschwindigkeitsschwellwert liegt, wird der Kraftschwellenwert auf seinen zweiten Wert Fₜₕ₂ gesetzt.

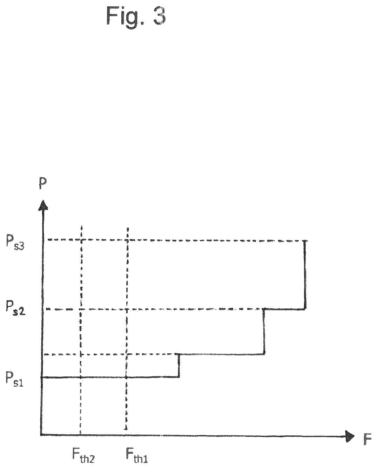

In Fig. 3 wird ein Ausführungsbeispiel für einen weichen Übergang gezeigt. Es ist die Anpassung P der Unterstützung des elektrischen Antriebs über der von außen auf den Schieber einwirkenden Kraft F abgebildet. Des Weiteren sind der hohe Wert Fₜₕ₁ und der niedrige Wert Fₜₕ₂, auf den der Kraftschwellenwert gesetzt werden kann abgebildet. Es sind drei Anpassungsstufen Pₛ₁, Pₛ₂ und Pₛ₃ abgebildet.

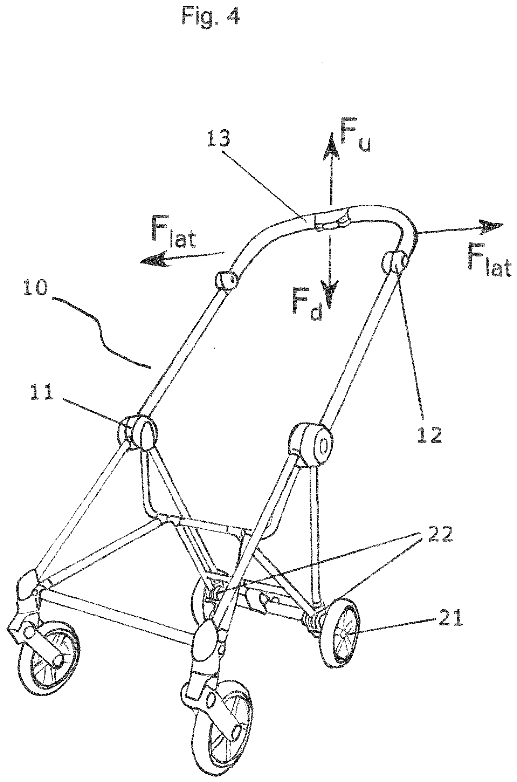

Fig. 4 zeigt ein erfindungsgemäßes Kinderwagengestell in einer schematischen Schrägansicht. Der Pfeile F_{d} zeigt eine an einem Handgriff 13 (horizontaler Abschnitt eines Schiebers 10) angreifende, nach unten gerichtete Kraft an. Der Pfeil Fᵤ zeigt eine an dem Handgriff 13 angreifende nach oben gerichtete Kraft an. Die Pfeile Fₗₐₜ zeigen seitwärts gerichtete Kräfte an. Der Handgriff 13 ist gegenüber einem unteren Abschnitt des Schiebers 10 schwenkbar gelagert. Konkret kann der Handgriff 13 in verschiedenen Positionen verschwenkt (und eingerastet) werden, um eine Höhenverstellung des Handgriffes 13 durchzuführen.

Zwischen dem schwenkbaren Handgriff 13 und dem unteren Abschnitt des Schiebers 10 ist eine schwenkbare Lagerung 12 (mit entsprechenden Gelenken) vorgesehen.

Der (gesamte) Schieber 10 ist wiederum vorzugsweise an einer schwenkbaren Lagerung 11 an einem Hauptkörper des Kinderwagengestells schwenkbar gelagert (insbesondere um das Kinderwagengestell zusammenfalten zu können).

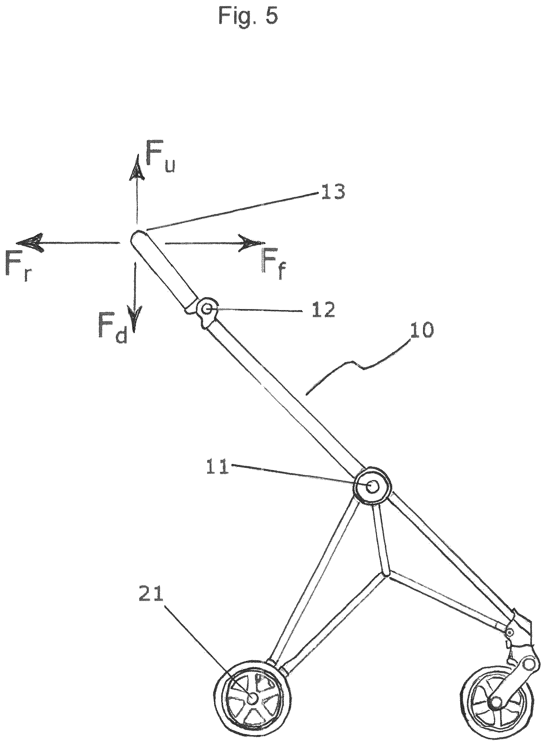

In der schwenkbaren Lagerung 11 und/oder in der schwenkbaren Lagerung 12 ist/sind vorzugsweise eine Sensoreinrichtung/Sensoreinrichtungen vorgesehen, um eine auf den Handgriff 13 wirkende Kraft eines Benutzers (insbesondere Fᵤ und F_{d}) zu erfassen. Weiterhin (siehe Fig. 5) können vorzugsweise mit einer derartigen Sensoreinrichtung bzw. derartigen Sensoreinrichtungen eine vorwärtsgerichtete Kraft F_{f} sowie eine rückwärtsgerichtete Kraft Fᵣ erfasst werden. In Radnaben 21 können vorzugsweise (nicht im Detail erkennbar) Motoren platziert werden. Alternativ kann an einer Achse 22 (insbesondere an Abschnitten der Achse, die benachbart zu der Radnabe 21 sind) Motoren platziert werden.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden.

### Bezugszeichenliste:

- F: Kraft, die auf den Schieber des Kinderwagens einwirkt
- Fₜₕ₁: erster Wert des Kraftschwellenwerts
- Fₜₕ₂: zweiter Wert des Kraftschwellenwerts
- P: Anpassung der Unterstützung, beispielsweise in Prozent bezüglich der max. möglichen Unterstützung
- Ps1: Anpassungsstufe
- Ps2: Anpassungsstufe
- Ps3: Anpassungsstufe
- v: aktuell erfasste Geschwindigkeit des Kinderwagens;
- S0: Abfrage, ob sich die Hinterräder des Kinderwagens drehen;
- S1: Abfrage, ob die aktuelle Geschwindigkeit in einem niedrigen Bereich liegt;
- S2a: Setzen des Kraftschwellenwerts auf einen hohen Wert;
- S2b: Setzen des Kraftschwellenwerts auf einen niedrigen Wert;
- S3: Abfrage, ob der Kraftschwellenwert überschritten ist; sowie
- S4: Ansteuern des elektrischen Antriebs.
- 10: Schieber
- 11: Schwenkbare Lagerung
- 12: Schwenkbare Lagerung
- 13: Handgriff (horizontaler Abschnitt des Schiebers)
- 21: Radnabe
- 22: Achse

## Patentansprüche

1. Kinderwagen oder Kinderwagengestell, umfassend
mindestens einen Motor, insbesondere Elektromotor, zum unterstützenden Antreiben des Kinderwagen oder Kinderwagengestells,
einen Schieber zum Schieben des Kinderwagen oder Kinderwagengestells, mindestens eine Kraft-Sensoreinrichtung zum Erfassen einer Richtung und/oder eines Betrages einer Kraft und/oder einer Kraftkomponente, die auf den Schieber einwirkt, und/oder zum Erfassen einer aus dieser Kraft bzw. Kraftkomponente abgeleiteten Größe, insbesondere eines Drehmomentes und/oder einer zeitlichen Änderung der Kraft bzw. Kraftkomponente,
mindestens eine Geschwindigkeits-Sensoreinrichtung zur Bestimmung einer Geschwindigkeit des Kinderwagens bzw. Kinderwagengestells, und mindestens eine Steuereinrichtung, die derart konfiguriert ist, dass die Motorunterstützung abhängig von einem Vergleich der gemessenen Kraft und/oder Kraftkomponente und/oder der davon abgeleiteten Größe mit einem Kraftschwellenwert angepasst wird,
**dadurch gekennzeichnet dass** der Kraftschwellenwert abhängig von einem Vergleich der gemessenen Geschwindigkeit mit einem Geschwindigkeitsschwellenwert festgelegt wird, wobei die Steuereinrichtung konfiguriert ist, einen Kraftschwellenwert auf einen ersten positiven Wert zu setzen, wenn eine aktuelle Geschwindigkeit kleiner als oder, in einer Alternative, kleiner/gleich dem
Geschwindigkeitsschwellwert ist und auf einen zweiten positiven Wert zu setzen, wenn die aktuelle Geschwindigkeit des Kinderwagens größer/gleich dem, oder, in der Alternative, größer als der Geschwindigkeitsschwellwert ist, wobei der erste positive Wert ungleich dem zweiten positiven Wert, vorzugsweise größer als dieser, ist.

2. Kinderwagen oder Kinderwagengestell nach Anspruch 1, umfassend mindestens einen Motor, insbesondere Elektromotor, zum unterstützenden Antreiben des Kinderwagen oder Kinderwagengestells,
einen Schieber zum Schieben des Kinderwagen oder Kinderwagengestells, mindestens eine Kraft-Sensoreinrichtung zum Erfassen einer Richtung und/oder eines Betrages einer Kraft und/oder einer Kraftkomponente, die auf den Schieber einwirkt, und/oder zum Erfassen einer aus dieser Kraft bzw. Kraftkomponente abgeleiteten Größe, insbesondere eines Drehmomentes und/oder einer zeitlichen Änderung der Kraft bzw. Kraftkomponente, und
mindestens eine Steuereinrichtung, insbesondere die mindestens eine Steuereinrichtung nach Anspruch 1, die derart konfiguriert ist, dass die Motorunterstützung weich angesteuert wird, insbesondere so eingestellt wird, dass nicht sofort eine vollständige aufgrund von Randbedingungen errechnete Zielleistung abgerufen wird, sondern dass der Übergang zwischen der aktuellen Leistung, von ggf. 0 oder größer 0, und der Zielleistung in einem Zeitintervall über mindestens einen Zwischenschritt oder mehrere Zwischenschritte oder zumindest zeitweise kontinuierlich erfolgt.

3. Kinderwagen oder Kinderwagengestell nach einem der vorhergehenden Ansprüche,
**dadurch gekennzeichnet, dass**
die Kraft-Sensoreinrichtung mindestens einen Drehmomentsensor und/oder mindestens zwei Sensoren umfasst.

4. Kinderwagen oder Kinderwagengestell nach einem der vorhergehenden Ansprüche,
**dadurch gekennzeichnet, dass**
die Steuereinrichtung derart konfiguriert ist, dass sie, sobald eine aktuell erfasste Kraft einen jeweiligen, insbesondere den in Abhängigkeit der aktuellen Geschwindigkeit relevanten, Kraftschwellenwert überschreitet, oder, in einer Alternative, erreicht, eine Unterstützung durch den Antrieb zulässt und/oder, solange eine aktuell erfasste Kraft den/einen, insbesondere den in Abhängigkeit der aktuellen Geschwindigkeit relevanten, Kraftschwellenwert nicht überschreitet, oder, in einer/der Alternative, nicht erreicht, eine Unterstützung des Benutzers durch den Antrieb nicht zulässt.

5. Kinderwagen oder Kinderwagengestell nach einem der vorhergehenden Ansprüche,
**dadurch gekennzeichnet, dass**
die Steuereinrichtung derart konfiguriert ist, dass sie eine Unterstützung durch den Antrieb nur dann zulässt, wenn sich mindestens ein Rad dreht.

6. Kinderwagen oder Kinderwagengestell nach einem der vorhergehenden Ansprüche,
**dadurch gekennzeichnet, dass**
die Steuereinrichtung derart konfiguriert ist, dass sie eine Unterstützung durch den Antrieb nur dann zulässt, wenn basierend auf einer Auswertung von Messwerten, insbesondere von Messwerten hinsichtlich einer zum Schieben aufgebrachten Kraft - bzw. von deren Komponente/n und/oder daraus abgeleiteten Größe/n - davon auszugehen ist, dass ein menschlicher Benutzer den Kinderwagen schiebt.

7. Kinderwagen oder Kinderwagengestell nach einem der vorhergehenden Ansprüche,
**dadurch gekennzeichnet, dass**
die Steuereinrichtung derart konfiguriert ist, dass sie den elektrische Antrieb zur Unterstützung derart ansteuert, dass eine durchschnittliche aufzuwendende Kraft, die benötigt wird, um den Kinderwagen zu schieben oder zu ziehen, konstant, insbesondere zumindest für einen bestimmten Zeitabschnitt, auf einen vorab festgelegten Kraftwert geregelt wird, wobei es sich bei dem Kraftwert vorzugsweise um den ersten oder den zweiten Kraftschwellenwert, besonders bevorzugt um den zweiten Kraftschwellenwert, handelt.

8. Kinderwagen oder Kinderwagengestell nach einem der vorhergehenden Ansprüche, insbesondere nach einem der Ansprüche 2 bis 7, **dadurch gekennzeichnet, dass**
die Steuerungseinrichtung derart ausgebildet ist, dass der insbesondere weiche Übergang so ausgestaltet ist, dass jedes Mal, wenn ein Messwert aufgenommen wird eine Anpassung der Motorleistung erfolgt, indem die Antriebsleistung um einen Teil der Differenz zwischen der aktuellen Leistung und der ermittelten Zielleistung angepasst wird.

9. Kinderwagen oder Kinderwagengestell nach einem der vorhergehenden Ansprüche,
**dadurch gekennzeichnet, dass**
der Geschwindigkeitsschwellwert kleiner als 4 km/h ist, vorzugsweise mindestens 1 km/h und/oder höchstens bei 3 km/h beträgt, beispielsweise ca. 2 km/h beträgt, und/oder
der erste Wert des Kraftschwellenwertes höher als der zweite Wert des Kraftschwellenwertes nach Anspruch 3 ist, wobei besonders bevorzugt der erste Wert 150% bis 250%, z.B. ca. 200%, des zweiten Wertes beträgt, und/oder
der erste Wert des Kraftschwellenwertes nach Anspruch 3 größer oder gleich 20 N ist, oder größer oder gleich 25 N ist, oder größer oder gleich 30 N ist, und/oder der zweite Wert des Kraftschwellenwertes nach Anspruch 3 zwischen 8 N und 25 N liegt, bevorzugt zwischen 10 N und 20 N liegt, z.B. 15 N oder 17 N beträgt und/oder
die Länge des Zeitintervalls nach Anspruch 2 maximal 2 s (zwei Sekunden), vorzugsweise maximal 1 s beträgt und/oder mindestens 0,01 s, vorzugsweise mindestens 0,05 s beträgt.

10. Verfahren zur Steuerung eines Kinderwagens oder Kinderwagengestells, nach einem der Ansprüche 1 bis 9, wobei eine Richtung und/oder ein Betrag einer Kraft und/oder einer Kraftkomponente, die auf einen Schieber (10) einwirkt, und/oder eine aus dieser Kraft bzw. Kraftkomponente abgeleitete Größe, insbesondere ein Drehmoment und/oder eine zeitliche Änderung der Kraft bzw. Kraftkomponente erfasst wird,
wobei eine Geschwindigkeit des Kinderwagens bzw. Kinderwagengestells bestimmt wird, und
wobei die Motorunterstützung abhängig von einem Vergleich der gemessenen Kraft und/oder Kraftkomponente und/oder der davon abgeleiteten Größe mit einem Kraftschwellenwert angepasst wird, wobei der Kraftschwellenwert abhängig von einem Vergleich der gemessenen Geschwindigkeit mit einem Geschwindigkeitsschwellenwert festgelegt wird.

11. Verfahren nach Anspruch 10, zur Steuerung eines Kinderwagens oder Kinderwagengestells, insbesondere nach einem der Ansprüche 1 bis 10, wobei eine Richtung und/oder ein Betrag einer Kraft und/oder einer Kraftkomponente, die auf einen Schieber (10) einwirkt, und/oder eine aus dieser Kraft bzw. Kraftkomponente abgeleitete Größe, insbesondere ein Drehmoment und/oder eine zeitliche Änderung der Kraft bzw. Kraftkomponente erfasst wird,
wobei die Motorunterstützung weich angesteuert wird, insbesondere so eingestellt wird, dass nicht sofort eine vollständige aufgrund von Randbedingungen errechnete Zielleistung abgerufen wird, sondern dass der Übergang zwischen der aktuellen Leistung, von ggf. 0 oder größer 0, und der Zielleistung in einem Zeitintervall über mindestens einen Zwischenschritt oder mehrere Zwischenschritte oder zumindest zeitweise kontinuierlich erfolgt.

12. Verfahren nach Anspruch 10 oder 11,
**dadurch gekennzeichnet, dass**
ein Kraftschwellenwert auf einen ersten positiven Wert gesetzt wird, wenn eine aktuelle Geschwindigkeit kleiner als oder, in einer Alternative, kleiner/gleich dem Geschwindigkeitsschwellwert ist und auf einen zweiten positiven Wert gesetzt wird, wenn die aktuelle Geschwindigkeit des Kinderwagens größer oder gleich dem, oder, in der Alternative, größer als der Geschwindigkeitsschwellwert ist, wobei der erste positive Wert ungleich dem zweiten positiven Wert, vorzugsweise größer als dieser, ist.

13. Verfahren nach einem der Ansprüche 10 bis 12,
**dadurch gekennzeichnet, dass**
sobald eine aktuell erfasste Kraft einen jeweiligen, insbesondere den in Abhängigkeit der aktuellen Geschwindigkeit relevanten, Kraftschwellenwert erreicht oder, in einer Alternative, überschreitet, eine Unterstützung durch den Antrieb zugelassen wird und/oder, solange eine aktuell erfasste Kraft den/einen, insbesondere den in Abhängigkeit der aktuellen Geschwindigkeit relevanten, Kraftschwellenwert nicht erreicht oder, in einer/der Alternative, nicht überschreitet, eine Unterstützung des Benutzers durch den Antrieb nicht zugelassen wird.

14. Verfahren nach einem der Ansprüche 10 bis 13,
**dadurch gekennzeichnet, dass**
eine Unterstützung durch den Antrieb nur dann zugelassen wird, wenn sich mindestens ein Rad dreht.

15. Verfahren nach einem der Ansprüche 10 bis 14,
**dadurch gekennzeichnet, dass**
eine Unterstützung durch den Antrieb nur dann zugelassen wird, wenn basierend auf einer Auswertung von Messwerten, insbesondere von Messwerten hinsichtlich einer zum Schieben aufgebrachten Kraft - bzw. von deren Komponente/n und/oder daraus abgeleiteten Größe/n - davon auszugehen ist, dass ein menschlicher Benutzer den Kinderwagen schiebt.

16. Verfahren nach einem der Ansprüche 10 bis 15,
**dadurch gekennzeichnet, dass**
der elektrische Antrieb zur Unterstützung derart angesteuert wird, dass eine durchschnittliche aufzuwendende Kraft, die benötigt wird, um den Kinderwagen zu schieben oder zu ziehen, konstant, insbesondere zumindest für einen bestimmten Zeitabschnitt, auf einen vorab festgelegten Kraftwert geregelt wird, wobei es sich bei dem Kraftwert vorzugsweise um den ersten oder den zweiten Kraftschwellenwert, besonders bevorzugt um den zweiten Kraftschwellenwert, handelt.

17. Verfahren nach einem der Ansprüche 10 bis 16, insbesondere nach einem der Ansprüche 11 bis 16,
**dadurch gekennzeichnet, dass**
die Steuerungseinrichtung derart ausgebildet ist, dass der insbesondere weiche Übergang so ausgestaltet ist, dass jedes Mal, wenn ein Messwert aufgenommen wird eine Anpassung der Motorleistung erfolgt, indem die Antriebsleistung um einen Teil der Differenz zwischen der aktuellen Leistung und der ermittelten Zielleistung angepasst wird.

## Claims

1. Pram or pram frame, comprising
at least one motor, in particular an electric motor, for assistive driving of the pram or pram frame,
a push bar for pushing the pram or pram frame,
at least one force-sensor device for detecting a direction and/or an amount of a force and/or a force component acting on the push bar, and/or for detecting a variable derived from this force or force component, in particular a torque and/or a change over time of the force or force component,
at least one speed sensor device for determining a speed of the pram or pram frame, and
at least one control device, which is configured such that the motor assistance is adapted depending on a comparison of the measured force and/or force component and/or the variable derived therefrom with a force threshold value,
**characterized in that** the force threshold value is defined depending on a comparison of the measured speed with a speed threshold value, wherein
the control device is configured to set a force threshold value to a first positive value if a current speed is less than or, in an alternative, less than or equal to the speed threshold value and to set it to a second positive value if the current speed of the pram is greater than or equal to or, in the alternative, greater than the speed threshold value, wherein the first positive value is not equal to the second positive value, preferably is greater than this value.

2. Pram or pram frame as claimed in claim 1, comprising
at least one motor, in particular an electric motor, for assistive driving of the pram or pram frame,
a push bar for pushing the pram or pram frame,
at least one force-sensor device for detecting a direction and/or an amount of a force and/or a force component acting on the push bar, and/or for detecting a variable derived from this force or force component, in particular a torque and/or a change over time of the force or force component, and
at least one control device, in particular the at least one control device as claimed in claim 1, which is configured such that the motor assistance is actuated softly, in particular is set so that a complete target power calculated on the basis of boundary conditions is not requested immediately, but rather the transition between the current power, of possibly 0 or greater than 0, and the target power takes place in a time interval via at least one intermediate step or multiple intermediate steps or at least temporarily continuously.

3. Pram or pram frame as claimed in any one of the preceding claims,
**characterized in that**
the force-sensor device comprises at least one torque sensor and/or at least two sensors.

4. Pram or pram frame as claimed in any one of the preceding claims,
**characterized in that**
the control device is configured such that, as soon as a currently detected force exceeds a respective force threshold value, which is in particular relevant depending on the current speed, or, in an alternative, reaches this value, it permits an assistance by the drive and/or, as long as a currently detected force does not exceed the/a force threshold value, which is in particular relevant depending on the current speed, or, in a/the alternative, does not reach this value, it does not permit an assistance of the user by the drive.

5. Pram or pram frame as claimed in any one of the preceding claims,
**characterized in that**
the control device is configured such that it permits an assistance by the drive only when at least one wheel rotates.

6. Pram or pram frame as claimed in any one of the preceding claims,
**characterized in that**
the control device is configured such that it only permits an assistance by the drive when, based on an evaluation of measured values, in particular measured values with respect to a force applied for pushing - or of its component(s) and/or variable(s) derived therefrom - it is to be presumed that a human user pushes the pram.

7. Pram or pram frame as claimed in any one of the preceding claims,
**characterized in that**
the control device is configured such that it actuates the electric drive for assistance such that an average force to be applied, which is required to push or pull the pram, is consistently regulated to a previously defined force value, in particular at least for a certain time interval, wherein the force value is preferably the first or the second force threshold value, particularly preferably the second force threshold value.

8. Pram or pram frame as claimed in any one of the preceding claims, in particular as claimed in any one of claims 2 to 7,
**characterized in that**
the control device is designed such that the particularly soft transition is designed so that each time a measured value is recorded, the motor power is adjusted **in that** the drive power is adjusted by a part of the difference between the current power and the determined target power.

9. Pram or pram frame as claimed in any one of the preceding claims,
**characterized in that**
the speed threshold value is less than 4 km/h, preferably at least 1 km/h and/or is at most 3 km/h, for example, is approximately 2 km/h, and/or
the first value of the force threshold value is higher than the second value of the force threshold value as claimed in claim 3, wherein particularly preferably the first value is 150% to 250%, for example, approximately 200%, of the second value, and/or
the first value of the force threshold value as claimed in claim 3 is greater than or equal to 20 N, or is greater than or equal to 25 N, or is greater than or equal to 30 N,
and/or the second value of the force threshold value as claimed in claim 3 is between 8 N and 25 N, preferably is between 10 N and 20 N, for example, is 15 N or 17 N, and/or the length of the time interval as claimed in claim 2 is at most 2 seconds (two seconds), preferably is at most 1 second, and/or is at least 0.01 seconds, preferably at least 0.05 seconds.

10. Method for controlling a pram or pram frame, as claimed in any one of claims 1 to 9, wherein a direction and/or an amount of a force and/or a force component which acts on a push bar (10), and/or a variable derived from this force or force component, in particular a torque and/or a change over time of the force or force component is detected,
wherein a speed of the pram or pram frame is determined, and
wherein the motor assistance is adjusted depending on a comparison of the measured force and/or force component and/or the variable derived therefrom with a force threshold value, wherein the force threshold value is defined depending on a comparison of the measured speed with a speed threshold value.

11. Method as claimed in claim 10, for controlling a pram or pram frame, in particular as claimed in any one of claims 1 to 10, wherein a direction and/or an amount of a force and/or a force component which acts on a push bar (10), and/or a variable derived from this force or force component, in particular a torque and/or a change over time of the force or force component is detected,
wherein the motor assistance is softly actuated, in particular is set so that a complete target power calculated on the basis of boundary conditions is not requested immediately, but rather the transition between the current power, of possibly 0 or greater than 0, and the target power takes place in a time interval via at least one intermediate step or multiple intermediate steps or at least temporarily continuously.

12. Method as claimed in claim 10 or 11,
**characterized in that**
a force threshold value is set to a first positive value if a current speed is less than or, in an alternative, less than or equal to the speed threshold value and is set to a second positive value if the current speed of the pram is greater than or equal to or, in the alternative, greater than the speed threshold value, wherein the first positive value is not equal to the second positive value, preferably is greater than this value.

13. Method as claimed in any one of claims 10 to 12,
**characterized in that**
as soon as a currently detected force reaches or, in an alternative, exceeds a respective force threshold value, which is in particular relevant depending on the current speed, an assistance by the drive is permitted and/or, as long as a currently detected power does not reach or, in a/the alternative, does not exceed the/a force threshold value, which is in particular relevant depending on the current speed, an assistance of the user by the drive is not permitted.

14. Method as claimed in any one of claims 10 to 13,
**characterized in that**
an assistance by the drive is only permitted when at least one wheel rotates.

15. Method as claimed in any one of claims 10 to 14,
**characterized in that**
an assistance by the drive is only permitted if, based on an evaluation of measured values, in particular measured values with respect to a force applied for pushing - or of its component(s) and/or variable(s) derived therefrom - it is to be presumed that a human user pushes the pram.

16. Method as claimed in any one of claims 10 to 15,
**characterized in that**
the electric drive is actuated for assistance such that an average force to be applied, which is required to push or pull the pram, is consistently regulated, in particular at least for a certain time interval, to a previously defined force value, wherein the force value is preferably the first or the second force threshold value, particularly preferably the second force threshold value.

17. Method as claimed in any one of claims 10 to 16, in particular as claimed in any one of claims 11 to 16,
**characterized in that**
the control device is designed such that the particularly soft transition is designed so that each time a measured value is recorded, the motor power is adjusted **in that** the drive power is adjusted by a part of the difference between the current power and the determined target power.

## Revendications

1. Poussette ou châssis de poussette comprenant :
au moins un moteur, en particulier un moteur électrique, pour la propulsion assistée de la poussette ou du châssis de poussette,
un guidon pour pousser la poussette ou le châssis de poussette,
au moins une installation de capteur de force destinée à capter une direction et/ou une grandeur d'une force et/ou d'une composante de force agissant sur le guidon et/ou à capter une grandeur dérivée de cette force ou composante de force, en particulier un couple de rotation et/ou une évolution dans le temps de la force ou de la composante de force,
au moins une installation de capteur de vitesse destinée à déterminer une vitesse de la poussette ou du châssis de poussette et
au moins une installation de commande configurée de telle manière que l'assistance par le moteur soit adaptée en fonction d'une comparaison de la force et/ou composante de force mesurée et/ou de la grandeur dérivée de celle-ci avec une valeur de seuil de force,
**caractérisée en ce que** la valeur de seuil de force est fixée en fonction d'une comparaison de la vitesse mesurée avec une valeur de seuil de vitesse, l'installation de commande étant configurée pour fixer une valeur de seuil de force à une première valeur positive si une vitesse actuelle est inférieure ou, dans une variante, inférieure ou égale à la valeur de seuil de vitesse et à une deuxième valeur positive si la vitesse actuelle de la poussette est supérieure ou égale ou, dans une variante, supérieure à la valeur de seuil de vitesse, la première valeur positive étant différente de la deuxième valeur positive, de préférence supérieure à celle-ci.

2. Poussette ou châssis de poussette selon la revendication 1, comprenant :
au moins un moteur, en particulier un moteur électrique, pour la propulsion assistée de la poussette ou du châssis de poussette,
un guidon pour pousser la poussette ou le châssis de poussette,
au moins une installation de capteur de force destinée à capter une direction et/ou une grandeur d'une force et/ou d'une composante de force agissant sur le guidon et/ou à capter une grandeur dérivée de cette force ou composante de force, en particulier un couple de rotation et/ou une évolution dans le temps de la force ou de la composante de force et
au moins une installation de commande, en particulier l'au moins une installation de commande selon la revendication 1, qui est configurée de telle manière que l'assistance par le moteur soit actionnée de façon souple, en particulier réglée de telle façon que la puissance visée calculée sur la base des conditions aux limites ne soit pas tout de suite appelée entièrement mais que la transition entre la puissance actuelle, éventuellement de 0 ou plus de 0, et la puissance visée s'effectue sur un intervalle de temps avec au moins une étape intermédiaire ou plusieurs étapes intermédiaires ou, au moins par moments, de façon continue.

3. Poussette ou châssis de poussette selon l'une des revendications précédentes, **caractérisée en ce que** l'installation de capteur de force comprend au moins un capteur de couple de rotation et/ou au moins deux capteurs.

4. Poussette ou châssis de poussette selon l'une des revendications précédentes, **caractérisée en ce que** l'installation de commande est configurée de telle manière qu'elle autorise une assistance par la propulsion dès qu'une force actuellement captée dépasse ou, dans une variante, atteint une valeur de seuil de force correspondante, en particulier la valeur de seuil de force pertinente en fonction de la vitesse actuelle, et/ou n'autorise pas une assistance de l'utilisateur par la propulsion tant qu'une force actuellement captée ne dépasse pas ou, dans une/la variante, n'atteint pas une valeur de seuil de force correspondante, en particulier la valeur de seuil de force pertinente en fonction de la vitesse actuelle.

5. Poussette ou châssis de poussette selon l'une des revendications précédentes, **caractérisée en ce que** l'installation de commande est configurée de telle manière qu'elle n'autorise une assistance par la propulsion que lorsque au moins une roue tourne.

6. Poussette ou châssis de poussette selon l'une des revendications précédentes, **caractérisée en ce que** l'installation de commande est configurée de telle manière qu'elle n'autorise une assistance par la propulsion que si l'on peut supposer, sur la base d'une analyse de valeurs de mesure, en particulier de valeurs de mesure d'une force exercée pour pousser ou de sa ou ses composantes et/ou d'une grandeur ou de grandeurs qui en sont dérivées, qu'un utilisateur humain pousse la poussette.

7. Poussette ou châssis de poussette selon l'une des revendications précédentes, **caractérisée en ce que** l'installation de commande est configurée de telle manière qu'elle active la propulsion électrique en vue de l'assistance de telle manière qu'une force moyenne à exercer pour pousser ou tirer la poussette soit régulée de façon constante à une valeur de force fixée auparavant, en particulier au moins pendant un intervalle de temps donné, la valeur de force étant de préférence la première valeur de seuil de force ou la deuxième, en particulier la deuxième valeur de seuil de force.

8. Poussette ou châssis de poussette selon l'une des revendications précédentes, en particulier selon l'une des revendications 2 à 7, **caractérisée en ce que** l'installation de commande est configurée de telle manière que la transition, en particulier souple, soit conçue de sorte que, chaque fois qu'une valeur de mesure est captée, la puissance du moteur soit adaptée en modifiant la puissance de propulsion d'une partie de la différence entre la puissance actuelle et la puissance visée déterminée.

9. Poussette ou châssis de poussette selon l'une des revendications précédentes, **caractérisée en ce que** la valeur de seuil de vitesse est inférieure à 4 km/h, de préférence au minimum de 1 km/h et/ou au maximum de 3 km/h, par exemple d'environ 2 km/h, et/ou
la première valeur de la valeur de seuil de force est supérieure à la deuxième valeur de la valeur de seuil de force selon la revendication 3, la première valeur représentant en particulier, de préférence, 150 % à 250 %, p. ex. environ 200 %, de la deuxième valeur, et/ou
la première valeur de la valeur de seuil de force selon la revendication 3 est supérieure ou égale à 20 N ou supérieure ou égale à 25 N ou supérieure ou égale à 30 N et/ou la deuxième valeur de la valeur de seuil de force selon la revendication 3 est comprise entre 8 N et 25 N, de préférence entre 10 N et 20 N, p. ex. est de 15 N ou 17 N et/ou
la durée de l'intervalle de temps selon la revendication 2 est au maximum de 2 s (deux secondes), de préférence au maximum de 1 s et/ou au minimum de 0,01 s, de préférence au minimum de 0,05 s.

10. Procédé pour la commande d'une poussette ou d'un châssis de poussette selon l'une des revendications 1 à 9, dans lequel une direction et/ou une grandeur d'une force et/ou d'une composante de force agissant sur un guidon (10) et/ou une grandeur dérivée de cette force ou composante de force, en particulier un couple de rotation et/ou une évolution dans le temps de la force ou de la composante de force, sont captées,
dans lequel une vitesse de la poussette ou du châssis de poussette est déterminée et
dans lequel l'assistance par le moteur est adaptée en fonction d'une comparaison de la force et/ou composante de force mesurée et/ou de la grandeur qui en est dérivée avec une valeur de seuil de force, la valeur de seuil de force étant fixée en fonction d'une comparaison de la vitesse mesurée avec une valeur de seuil de vitesse.

11. Procédé selon la revendication 10 pour la commande d'une poussette ou d'un châssis de poussette, en particulier selon l'une des revendications 1 à 10, dans lequel une direction et/ou une grandeur d'une force et/ou d'une composante de force agissant sur un guidon (10) et/ou une grandeur dérivée de cette force ou composante de force, en particulier un couple de rotation et/ou une évolution dans le temps de la force ou de la composante de force, sont captées,
dans lequel l'assistance par le moteur est activée de façon souple, en particulier réglée de telle façon que la puissance visée calculée sur la base des conditions aux limites ne soit pas tout de suite appelée entièrement mais que la transition entre la puissance actuelle, éventuellement de 0 ou plus de 0, et la puissance visée s'effectue sur un intervalle de temps avec au moins une étape intermédiaire ou plusieurs étapes intermédiaire ou, au moins par moments, de façon continue.

12. Procédé selon la revendication 10 ou 11, **caractérisé en ce qu'**une valeur de seuil de force est fixée à une première valeur positive si une vitesse actuelle est inférieure ou, dans une variante, inférieure ou égale à la valeur de seuil de vitesse et à une deuxième valeur positive si la vitesse actuelle de la poussette est supérieure ou égale ou, dans une variante, supérieure à la valeur de seuil de vitesse, la première valeur positive étant différente de la deuxième valeur positive, de préférence supérieure à celle-ci.

13. Procédé selon l'une des revendications 10 à 12, **caractérisé en ce que** l'assistance par la propulsion est autorisée dès qu'une force actuellement captée atteint ou, dans une variante, dépasse une valeur de seuil de force correspondante, en particulier la valeur de seuil de force pertinente en fonction de la vitesse actuelle, et/ou l'assistance de l'utilisateur par la propulsion n'est pas autorisée tant qu'une force actuellement captée n'atteint pas ou, dans une/la variante, ne dépasse pas une valeur de seuil de force correspondante, en particulier la valeur de seuil de force pertinente en fonction de la vitesse actuelle.

14. Procédé selon l'une des revendications 10 à 13, **caractérisé en ce qu'**une assistance par la propulsion n'est autorisée que lorsque au moins une roue tourne.

15. Procédé selon l'une des revendications 10 à 14, **caractérisé en ce qu'**une assistance par la propulsion n'est autorisée que si l'on peut supposer, sur la base d'une analyse de valeurs de mesure, en particulier de valeurs de mesure d'une force exercée pour pousser ou de sa ou ses composantes et/ou d'une grandeur ou de grandeurs qui en sont dérivées, qu'un utilisateur humain pousse la poussette.

16. Procédé selon l'une des revendications 10 à 15, **caractérisé en ce que** la propulsion électrique est activée en vue de l'assistance de telle manière qu'une force moyenne à exercer pour pousser ou tirer la poussette soit régulée de façon constante à une valeur de force fixée auparavant, en particulier au moins pendant un intervalle de temps donné, la valeur de force étant de préférence la première valeur de seuil de force ou la deuxième, en particulier la deuxième valeur de seuil de force.

17. Procédé selon l'une des revendications 10 à 16, en particulier selon l'une des revendications 11 à 16, **caractérisé en ce que** l'installation de commande est configurée de telle manière que la transition, en particulier souple, soit conçue de sorte que, chaque fois qu'une valeur de mesure est captée, la puissance du moteur soit adaptée en modifiant la puissance de propulsion d'une partie de la différence entre la puissance actuelle et la puissance visée déterminée.
